# EUROPÄISCHE PATENTSCHRIFT

(11) **EP 0 961 118 B1**
(45) Veröffentlichungstag und Bekanntmachung des Hinweises auf die Patenterteilung: **14.06.2006**
(21) Anmeldenummer: 99109205.7
(22) Anmeldetag: 20.05.1999
(51) Int. Cl.: G01N 35/10, B25J 9/10, B25J 9/02

(54) **Pipettierautomat**
Pipetting automat
Automate de pipettage

(30) Priorität: 25.05.1998 DE 19823283
(43) Veröffentlichungstag der Anmeldung: 01.12.1999
(73) Patentinhaber: Abbott GmbH & Co. KG, 65205 Wiesbaden (DE)
(72) Erfinder: Eipel, Heinz, 64625 Bensheim (DE)
(74) Vertreter: Isenbruck, Günter

(56) Entgegenhaltungen:
- EP-A- 0 021 972
- EP-A- 0 403 964
- WO-A-91/16675
- WO-A-98/05059
- FR-A- 2 597 607
- FR-A- 2 612 639
- US-A- 3 228 270
- US-A- 3 870 164
- US-A- 5 275 951

## Beschreibung

Die Erfindung betrifft einen Pipettierautomaten mit einem Antrieb zur Bewegung eines Pipettierwerkzeugs von einem Quell- an einen Zielort, der beispielsweise zum Massenscreening zur Entdeckung neuer Leitstrukturen besonders für die Pharmakologie und den Pflanzenschutz verwendet wird.

Es ist derzeit allgemein üblich, die zu testenden Substanzen im Mikrotiter-Format - mit 96 bis 1536 Töpfchen pro Platte - einem Testautomaten vorzulegen. Aus dieser Vorlage müssen die Substanzen mit einem Pipettierautomaten getrennt auf die einzelnen Analysenorte gebracht werden. Auch im späteren Verlauf der Tests sind weitere Pipettierschritte notwendig, die jedoch meist nicht für jeden Analyseort separat, sondern auch gemeinsam erfolgen können. Besonders zeitaufwendig ist bei der Durchführung von Massenscreening-Versuchen das Pipettieren von Einzelsubstanzen. Auch beim Screening mit sogenannten Spot-Arrays sind enorm viele Einzelpipettierschritte notwendig.

Die heute üblichen Pipettierautomaten führen das Pipettier-Werkzeug über eine Arbeitsfläche mit je einem Antrieb für die x-, die y- und meist auch für die z-Achse. Gemäß dem Stand der Technik kann man prinzipiell verschiedene Antriebsarten feststellen. So findet ein Schrittmotor-Antrieb Anwendung, der über eine Kugel-Umlaufspindel eine Linearbewegung überträgt. Von Vorteil ist hier die sehr hohe Genauigkeit bei relativ niedrigen Kosten. Der Hauptnachteil liegt darin, daß die Linearbewegung sehr langsam verläuft, selbst wenn beim eigentlichen Verstellvorgang eine Geschwindigkeitsrampe mit unterschiedlichen Geschwindigkeiten durchfahren wird. US 5 275 951 beschreibt einen Pipettierautomaten mit einem Schrittmotor - Antrieb.

Weiterhin kommen Gleichstrommotorantriebe mit resistivem, induktivem oder kapazititvem Sensor oder mit optischem Lineal zur Positionsrückmeldung zum Einsatz. Diese Antriebe sind wesentlich schneller als Schrittmotoren, doch aufwendig und daher teuer. WO 9 116 675 beschreibt eine solche Vorrichtung.

Auch für Linearmotoren anstelle von rotierenden Motoren gelten prinzipiell die gleichen Vor- und Nachteile.

Gegenstand der Erfindung ist ein Pipettierautomat, der bei hohen Pipettiergeschwindigkeiten die Nachteile der bisher üblichen Anordnungen vermeidet.

Gemäß der Erfindung ist die Aufteilung der linearen Bewegung in eine schnelle Bewegung über eine relativ lange Distanz zwischen Quell- und Zielort, wobei jeweils am Quell- und am Zielort automatisch feinjustierbare Endanschläge mit hoher Genauigkeit angebracht sind, möglich. Durch die verstellbaren Endanschläge, die normalerweise nur um einige Millimeter bzw. einige hundert Mikrometer verstellt werden müssen, ergibt sich in Kombination mit der schnellen Bewegung eine enorme Steigerung der Transfergeschwindigkeit.

Durch die Anordnung von Dämpfungsmitteln an den Endanschlägen wird die schnelle Bewegung vor Erreichen des Anschlages abgebremst. Hierdurch können Schläge vermieden werden.

Vorzugsweise ist der Antrieb als hydraulischer oder pneumatischer Linearantrieb ausgebildet und somit bei schneller Bewegung kostengünstig.

Zur Rückmeldung der Ankunft an den Endanschlägen können dort Sensoren zur Lageerfassung angebracht sein, die die Ankunft des Pipettierwerkzeugs an den Endanschlägen aufnehmen und gegebenenfalls einer Steuer- oder Speichereinheit zuführen. Gegenüber einem Abwarten des Endes des mechanischen Einschwingens am Anschlag wird die Geschwindigkeit nochmals gesteigert.

Schließlich ist es möglich, Endanschläge mit unterschiedlichen Einstellgenauigkeiten zu verwenden, wodurch die Kosten weiter gesenkt werden können, da bislang die höchste Einstellgenauigkeit einer einzelnen Bewegungsrichtung für das gesamte System maßgeblich war.

Weiterhin ist ein Verfahren Gegenstand der Erfindung, mit welchem die Pipettiergeschwindigkeiten deutlich erhöht werden, was durch die voneinander unabhängige Verstellung innerhalb kleiner Distanzen des Endanschlags bzw. der relativ langen Distanzen erfolgt.

In einer Weiterbildung des Verfahrens wird die schnelle Bewegung vor Erreichen des Endanschlages abgebremst, wobei weiterhin nach Erreichen des Endanschlages die Lage des Pipettierwerkzeugs gemessen werden kann und gegebenenfalls bei Positionsabweichungen eine Korrektur erfolgen kann.

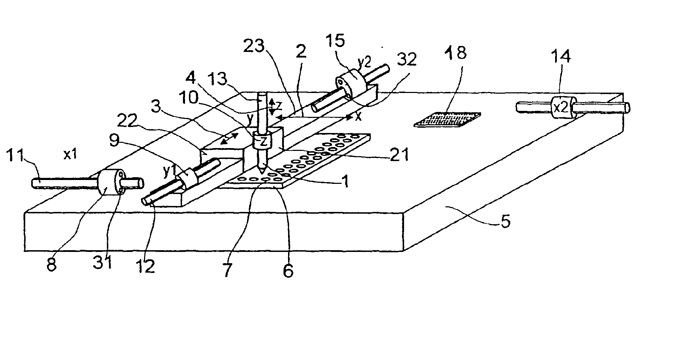

In der Zeichnung ist eine Prinzipskizze eines Pipettierautomaten gemäß der Erfindung dargestellt.

Der Pipettierautomat weist ein Pipettierwerkzeug 1 auf, welches in drei Achsen 2, 3, 4 in x-, y- und z-Richtung über eine Arbeitsfläche 5 bewegbar ist.

Auf der Arbeitsfläche 5 ist eine Substanz-Bank-Platte 6 angeordnet, die mehrere Gefäße 7 für Substanzen aufweist. Weiterhin ist ein Objektträger 18 auf der Arbeitsfläche 5 angeordnet, auf welchen die in der Platte 6 enthaltenen Substanzen aufgetragen werden sollen.

An dem Quellort, einem Gefäß 7 der Platte 6, wird das Pipettierwerkzeug 1 gegen Anschläge 8, 9, 10 zur Anlage gebracht worden, wobei die Endanschläge 8, 9, 10 über einen Spindeltrieb 11, 12, 13 verstellbar sind.

Am Zielort, einem Punkt auf dem Objektträger 18, ist das Pipettierwerkzeug 1 wiederum zur Anlage an verstellbare Endanschläge 14, 15 (x2, y2) gebracht, wobei der Antrieb für die eigentliche Bewegung des Pipettierwerkzeugs nicht dargestellt ist.

Das Pipettierwerkzeug 1 ist an einem Halter 21 befestigt, der in Richtung der z-Achse verschiebbar ist. Dieser Halter 21 ist seinerseits auf einem Schlitten 22 angeordnet, welcher in Richtung y-Achse 3 auf einem Balken 23 verschiebbar gelagert ist. Der Balken 23 wiederum ist in nicht dargestellter Weise in Richtung der x-Achse 2 bewegbar gelagert und angetrieben.

Als nicht dargestellter Antrieb kommt für die Überwindung der langen Strecken ein hydraulischer oder pneumatischer Antrieb zum Einsatz, wobei die Antriebselemente einfache Zylinder mit Kolben sein können. Von Vorteil ist hier die geringe Masse und die Robustheit der Antriebselemente, wodurch die Bewegungen besonders schnell durchgeführt werden können. Wegen der verstellbaren Endanschläge kann auf eine Positionsrückmeldung zwar grundsätzlich verzichtet werden, gleichwohl sind in den Endanschlägen 8, 15 aber Sensoren 31, 32 zur Bestätigung der Anlage des Schlittens 22 bzw. des Balkens 23 an den Endanschlägen vorgesehen, um Fehlabgaben bzw. -aufnahmen eines noch nicht in der Endposition befindlichen Pipettierwerkzeugs zu vermeiden.

Durch die Anordnung genauer, schrittmotorbewegter Endanschläge 8 bis 10, 14, 15 jeweils am Quell- und am Zielort und jeweils für die einzelnen Achsen 2, 3, 4 wird eine drastische Erhöhung der Pipettiergeschwindigkeiten erreicht, da die Endanschläge zwischen den einzelnen Pipettiervorgängen nur minimal verstellt werden müssen. Die Überbrückung der relativ langen Distanzen zwischen Quell- und Zielort können durch einen elektrischen, hydraulischen oder vorzugsweise pneumatischen Antrieb bewerkstelligt werden.

Weiterhin kann an den Endanschlägen ein hydraulischer oder pneumatischer Dämpfungszylinder angebracht werden, der die schnelle Bewegung bis genau zur Erreichung des jeweiligen voreingestellten Anschlags abbremst und Schläge verhindert. Dies ist in der Zeichnung nicht dargestellt.

Als hauptsächliche Anwendung ist eine "Umformatierung" von parallel durchzuführenden Analysen aus Mikrotiterplatten-Format auf ein Nano-Format mit einigen tausend Analysepunkten z.B. auf einem für die Mikroskopie üblichen Objektträger gedacht.

Die beispielsweise schrittrnotor-getriebenen Endanschläge x1 und y1 legen die Orte der Gefäße 7 der Mikrotiterplatte 6 fest, die als Quelle für die zu pipettierenden Substanzen angesehen wird. Die fein auflösenden Endanschläge x2 und y2 bestimmen die Zielorte auf dem Objektträger. Dabei kann die Auflösungsgenauigkeit der jeweiligen Endanschläge in Abhängigkeit von der erforderlichen Positionsgenauigkeit erfolgen. Beispielweise kann für die Anfahrt auf die relativ grob aufgelösten (gerasterten) Gefäße am Quellort eine geringere Genauigkeit als an den hochauflösenden Analysepunkten auf dem Objektträger am Zielort eingestellt werden. Diese Möglichkeit ist gegenüber den bislang bekannten Systemen besonders vorteilhaft.

## Patentansprüche

1. Pipettierautomat mit einem Antrieb zur Bewegung eines Pipettierwerkzeuges (1) von einem Quellort an einen Zielort, **dadurch gekennzeichnet, daß** am Quell- und/oder Zielort automatisch feinjustierbare Endanschläge (8-10, 14, 15) für die vom Antrieb erzeugten Bewegungen des Pipettierwerkzeuges (1) vorgesehen sind.

2. Pipettierautomat nach Anspruch 1, **dadurch gekennzeichnet, daß** an den Endanschlägen (8-10, 14, 15) Dämpfungsmittel angeordnet sind.

3. Pipettierautomat nach einem der Ansprüche 1 oder 2, **dadurch gekennzeichnet, daß** der Antrieb als hydraulischer oder pneumatischer Linearantrieb ausgebildet ist.

4. Pipettierautomat nach einem der Ansprüche 1 bis 3, **dadurch gekennzeichnet, daß** die Endanschläge (8-10, 14, 15) durch Schrittmotoren gesteuerte Anschlagsflächen aufweisen.

5. Pipettierautomat nach einem der Ansprüche 1 bis 4, **dadurch gekennzeichnet, daß** an den Endanschlägen (8-10, 14, 15) Sensoren (31, 32) zur Lageerfassung angebracht sind.

6. Pipettierautomat nach einem der Ansprüche 1 bis 5, **dadurch gekennzeichnet, daß** die Endanschläge (8, 9) des Quellortes gegenüber den Endanschlägen (14, 15) des Zielortes eine unterschiedliche Einstellgenauigkeit aufweisen.

7. Verfahren zum automatischen Pipettieren, umfassend eine Aufnahme einer Substanz an einem Quellort und die Abgabe der Substanz an einem Zielort sowie die Bewegung des Pipettierwerkzeugs vom Quellzum Zielort, **dadurch gekennzeichnet, daß** vom Quellort ausgehend eine schnelle Bewegung des Pipetierwerkzeugs erfolgt und daß am Zielort lageveränderliche Endanschläge zwischenzeitlich in eine genaue Position gebracht werden, wobei die Bewegungen örtlich voneinander unabhängig sind.

8. Verfahren nach Anspruch 7, **dadurch gekennzeichnet, daß** die schnelle Bewegung vor Erreichen des Endanschlags abgebremst wird.

9. Verfahren nach Anspruch 7 oder 8, **dadurch gekennzeichnet, daß** nach Erreichen des Endanschlages die Lage des Pipettierwerkzeugs gemessen wird.

## Claims

1. An automatic pipetting apparatus, having a drive for moving a pipetting instrument (1) from a source site to a target site, wherein end stops (8-10, 14, 15), which can be finely adjusted automatically, for the movements of the pipetting instrument (1) generated by the drive are provided at the source site and/or the target site.

2. The automatic pipetting apparatus according to claim 1, wherein shock-absorbing means are arranged on the end stops (8-10, 14, 15).

3. The automatic pipetting apparatus according to claim 1 or 2, wherein the drive is designed as a hydraulic or pneumatic linear drive.

4. The automatic pipetting apparatus according to any of claims 1 to 3, wherein the end stops (8-10, 14, 15) have stop faces which are controlled by stepper motors.

5. The automatic pipetting apparatus according to any of claims 1 to 4, wherein sensors (31, 32) for position detection are arranged on the end stops (8-10, 14, 15).

6. The automatic pipetting apparatus according to any of claims 1 to 5, wherein the end stops (8, 9) of the source site have a different adjustment accuracy from the end stops (14, 15) of the target site.

7. A method for automatic pipetting, comprising collection of a substance at a source site and delivery of the substance at a target site, and the movement of the pipetting instrument from the source site to the target site, wherein the pipetting instrument is moved rapidly from the source site, and wherein end stops, the position of which can be varied, are in the mean time moved into an accurate position at the target site, the movements being locally independent of one another.

8. The method according to claim 7, wherein the rapid movement is decelerated before the end stop is reached.

9. The method according to claim 7 or 8, wherein the position of the pipetting instrument is measured after the end stop has been reached.

## Revendications

1. Automate de pipetage avec un entraînement pour déplacer un instrument de pipetage (1) d'un endroit source à un endroit cible, **caractérisé en ce que** des butées finales (8 à 10, 14, 15) à ajustage fin automatique sont prévues à l'endroit source et/ou à l'endroit cible pour les déplacements de l'instrument de pipetage (1) générés par l'entraînement.

2. Automate de pipetage selon la revendication 1, **caractérisé en ce que** des moyens d'amortissement sont disposés sur les butées finales (8 à 10, 14, 15).

3. Automate de pipetage selon l'une quelconque des revendications 1 ou 2, **caractérisé en ce que** l'entraînement est conçu sous la forme d'un entraînement linéaire hydraulique ou pneumatique.

4. Automate de pipetage selon l'une quelconque des revendications 1 à 3, **caractérisé en ce que** les butées finales (8 à 10, 14, 15) comportent des surfaces de butée pilotées par des moteurs pas à pas.

5. Automate de pipetage selon l'une quelconque des revendications 1 à 4, **caractérisé en ce que** des capteurs (31, 32) pour la détection de position sont montés sur les butées finales (8 à 10, 14, 15).

6. Automate de pipetage selon l'une quelconque des revendications 1 à 5, **caractérisé en ce que** les butées finales (8, 9) de l'endroit source ont une précision de réglage différente de celle des butées finales (14, 15) du lieu cible.

7. Procédé de pipetage automatique, comprenant un prélèvement d'une substance à un endroit source et la délivrance de la substance à un endroit cible, ainsi que le déplacement de l'instrument de pipetage de l'endroit source à l'endroit cible, **caractérisé en ce qu'**un déplacement rapide de l'instrument de pipetage est assuré à partir de l'endroit source et **en ce qu'**à l'endroit cible, des butées finales modifiables en position sont amenées dans l'intervalle dans une position précise, les déplacements étant localement indépendants l'un de l'autre.

8. Procédé selon la revendication 7, **caractérisé en ce qu'**on freine le déplacement rapide avant l'atteinte de la butée finale.

9. Procédé selon la revendication 7 ou 8, **caractérisé en ce qu'**après atteinte de la butée finale, on mesure la position de l'instrument de pipetage.
